# EUROPÄISCHE PATENTSCHRIFT

(11) **EP 2 765 224 B1**
(45) Veröffentlichungstag und Bekanntmachung des Hinweises auf die Patenterteilung: **11.04.2018**
(21) Anmeldenummer: 13154908.1
(22) Anmeldetag: 12.02.2013
(51) Int. Cl.: C25B 13/02, C25B 15/08, C25B 1/04, C25B 9/00, B23C 3/00, C25B 1/10, C25B 9/08

(54) **Verfahren zum Betrieb einer Elektrolysezelle**
Method for operating an electrolysis cell
Procédé destiné au fonctionnement d'une cellule d'électrolyse

(43) Veröffentlichungstag der Anmeldung: 13.08.2014
(73) Patentinhaber: Airbus Defence and Space GmbH, 82024 Taufkirchen (DE)
(72) Erfinder: JEHLE, Walter, 88263 Horgenzell (DE); LUCAS, Joachim, 88634 Herdwangen-Schönach (DE); RAATSCHEN, Willigert, 88090 Immenstaad (DE)
(74) Vertreter: Daub, Thomas

(56) Entgegenhaltungen:
- EP-A1- 2 463 407
- DE-A1- 10 108 452
- DE-A1-102009 021 506
- US-A- 5 635 039
- US-A1- 2003 031 909
- US-A1- 2009 035 631

## Beschreibung

### Stand der Technik

Die Erfindung betrifft ein Verfahren zum Betrieb einer Elektrolysezelle zur elektrolytischen Spaltung von Wasser mit zumindest einer Membran nach dem Oberbegriff des Anspruchs 1.

Elektrolysezellen zur elektrolytischen Spaltung von Wasser in Wasserstoff und Sauerstoff nach dem Stand der Technik weisen zwei durch eine elektrolytgefüllte Membran getrennte Elektroden auf, wobei über die elektrolytgefüllte Membran ein Ladungsaustausch zur Ermöglichung der elektrolytischen Spaltung stattfindet. Das Wasser wird hierbei in einer Kontaktzone von der Membran und den Elektroden gespalten. Neben einer Zuführung von Wasser, das elektrolytisch gespalten werden soll, zu den Kontaktzonen der Membran ist es ferner erforderlich, eine Befeuchtung der Membran sicherzustellen, um eine Beschädigung durch Austrocknung zu vermeiden. Bei Verfahren zum Betrieb einer Elektrolysezelle nach dem Stand der Technik ist es daher bislang immer erforderlich, entweder eine hohe Wassermenge in die Elektrolysezelle einzubringen, beispielsweise durch Flutung von Gasräumen für Wasserstoff und Sauerstoff mit Wasser und/oder Elektrolyt, oder eine Fördervorrichtung zur gezielten Förderung von Wasser, die beispielsweise eine Pumpe umfasst, direkt an oder in die Membran zu verwenden. Ein Betrieb der Fördervorrichtung, beispielsweise der Pumpe, erfordert einen zusätzlichen apparativen Aufwand und einen zusätzlichen Energieaufwand. In der veröffentlichten europäischen Patentanmeldung EP 2 463 407 A1 des Anmelders wurde ein solches Verfahren zum Betrieb einer Elektrolysezelle beschrieben, bei dem Wasser in Mikrokanäle einer Membran gepumpt wurde, um in der Membran weiterverteilt zu werden. Überraschend wurde dabei gefunden, dass es mit der dort vorgeschlagenen Membran möglich ist, ein passives Wasserversorgungssystem, mit dem auf eine Fördervorrichtung verzichtet werden kann, zu realisieren.

Ferner sind aus der US 5,635,039 A, der US 2003/0031909 A1, der DE 10 2009 021 506 A1 und der DE 101 08 452 A1 bereits Verfahren zum Betrieb einer Elektrolysezelle zur elektrolytischen Spaltung von Wasser mit zumindest einer Membran bekannt.

Die Aufgabe der Erfindung besteht insbesondere darin, ein Verfahren zum Betrieb einer Elektrolysezelle mit einem reduzierten apparativen Aufwand und einem reduzierten Energieverbrauch bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Ferner wird ein Elektrolysesystem mit zumindest einer Elektrolysezelle zur elektrolytischen Spaltung von Wasser, die zumindest eine Membran aufweist, und mit einer Wasserzuführungseinheit zu einer Wasserversorgung der Elektrolysezelle, wobei die zumindest eine Membran als passive Wasserversorgungseinheit ausgebildet ist, vorgeschlagen.

### Vorteile der Erfindung

Die Erfindung geht aus von einem Verfahren zum Betrieb einer Elektrolysezelle zur elektrolytischen Spaltung von Wasser mit zumindest einer Membran. Es wird vorgeschlagen, dass die zumindest eine Membran passiv mit flüssigem Wasser versorgt wird.

Die Membran ist insbesondere von einem Diaphragma, das lediglich einen Transport von bestimmten Ionen, beispielweise von Hydroxidionen oder Protonen, erlaubt, nicht jedoch für atomaren oder molekularen Wasserstoff und Sauerstoff passierbar ist, und das mit einem Elektrolyt, beispielsweise einer Kaliumhydroxidlösung oder einem anderen Elektrolyten, gefüllt ist oder von einer Kationen-, einer Anionen- oder einer Protonenaustauschmembran, über die nur Kationen, Anionen oder einzelne Protonen ausgetauscht werden können, gebildet. Bevorzugt ist die Membran aus einem Polymer, insbesondere einem Polysulfon oder einem_Polyphenylensulfid, hergestellt. Unter "passiv mit flüssigem Wasser versorgt werden" soll insbesondere verstanden werden, dass die Membran pumpenfrei mit flüssigem Wasser aus einem Wasserreservoir, welches an die Membran angrenzt oder mit der Membran verbunden ist, versorgt wird und die Membran speziell dazu ausgebildet ist, mittels physikalischer Kräfte eines Membranmaterials, insbesondere Adhäsionskräfte von inneren und äußeren Oberflächen des Membranmaterials, Wasser aus dem Wasserreservoir in einen Innenbereich der Membran zu befördern und innerhalb des Innenbereichs zu verteilen, und eine Entnahmeleistung und Verteilungsleistung der Membran speziell dafür ausgelegt ist, einen Verbrauch von Wasser durch eine Elektrolyse unter einer Maximalleistung in einem sicheren Betriebszustand nachzuliefern. Insbesondere ist eine passive Versorgung der Membran mit flüssigem Wasser verschieden von einer Versorgung der Membran mit Wasser, bei der Wasser in Form von Wasserdampf in die Membran eingebracht wird und in dieser kondensiert. Unter einem "Wasserreservoir" soll insbesondere ein Wasservolumen, insbesondere ein in einem Wassertank und/oder einer Wasserleitung aufgenommenes Wasservolumen, das zur Versorgung der Membran vorgesehen ist, verstanden werden. Unter "speziell ausgelegt" soll insbesondere speziell gestaltet, speziell behandelt und/oder aus speziellen Materialien hergestellt verstanden werden. Es kann insbesondere ein reduzierter Energieverbrauch erreicht werden.

Erfindungsgemäß wird vorgeschlagen, dass in zumindest einem Verfahrensschritt, mittels zumindest einer in der zumindest einen Membran ausgeführten Kanalstruktur Wasser, innerhalb der Membran verteilt wird. Unter "einer Kanalstruktur" soll insbesondere eine Struktur mit länglichen Hohlräumen verstanden werden, die eine Länge aufweisen, die zumindest zehnmal so groß, vorteilhaft wenigstens fünfzigmal so groß und vorzugsweise wenigstens hundertmal so groß ist wie ein Durchmesser des Hohlraums. Insbesondere ist eine Kanalstruktur verschieden von einer Struktur mit als Poren ausgebildeten Hohlräumen, bei der mehrere Poren direkt ineinander übergehen. Insbesondere ist die Kanalstruktur in einem Membraninnenbereich ausgeführt und frei von Öffnungen zu zumindest einer Oberfläche der Membran, die eine Kontaktfläche zu Elektroden bildet. Unter einem "Membraninnenbereich" soll insbesondere ein Teilbereich der Membran verstanden werden, welcher auf zumindest zwei Seiten von zumindest einem Membranaußenbereich umgeben ist, welcher sich zumindest in einem Material, aus dem er hergestellt ist, und/oder in zumindest einem Materialwert, beispielsweise einer Porosität oder einer Elastizität, von dem Membraninnenbereich unterscheidet. Insbesondere ist der Membraninnenbereich frei von einem Kontaktbereich mit Elektroden und durch den zumindest einen Membranaußenbereich von den Elektroden getrennt. Insbesondere weist der Membraninnenbereich, in dem die Kanalstruktur angeordnet ist, eine gegenüber dem Membranaußenbereich, der frei von der Kanalstruktur ist, grobporige Struktur auf, worunter verstanden werden soll, dass ein mittlerer Durchmesser von Poren in dem Membraninnenbereich zumindest um zehn Prozent, vorteilhaft zumindest um zwanzig Prozent und bevorzugt zumindest um fünfzig Prozent größer ist als ein mittlerer Durchmesser von Poren in dem Membranaußenbereich. Insbesondere weist die Kanalstruktur eine gegenüber den Poren des Membranaußenbereichs hohe Transportleistung über längere Distanzen auf. Es kann insbesondere eine hohe Verteilungsleistung von Wasser innerhalb der Membran erreicht werden.

Erfindungsgemäß wird vorgeschlagen, dass in zumindest einem Verfahrensschritt Wasser mittels eines Kapillareffekts zumindest einer Hohlraumstruktur der zumindest einen Membran, der eine gegenüber einem Membraninnenbereich feinporige Struktur bildet, pumpenfrei aus einem Wasserreservoir in die Membran eingeführt wird. Unter einer "Hohlraumstruktur" soll insbesondere eine Struktur mit einer Vielzahl von im Material verteilten Hohlräumen, vorzugsweise Poren, verstanden werden. Unter einem "Kapillareffekt" soll insbesondere ein Effekt verstanden werden, bei dem eine Flüssigkeit, insbesondere Wasser, durch eine Oberflächenspannung und Grenzflächeneffekte in einer Hohlraumstruktur insbesondere auch gegen eine Schwerkraftwirkung anwirkend, in die Hohlraumstruktur eingezogen wird und sich in dieser ausbreitet. Eine Stärke des Kapillareffekts kann insbesondere durch eine Angabe eines Kapillardrucks und/oder einer Steighöhe erreicht werden. Unter einer "Steighöhe" soll insbesondere eine maximale Höhe einer Flüssigkeitssäule, insbesondere einer Wassersäule, verstanden werden, die sich in der Hohlraumstruktur aufgrund des Kapillareffekts gegen eine Schwerkraftwirkung einstellt. Insbesondere ist die zumindest eine Hohlraumstruktur zumindest in einem Membranaußenbereich, der frei von einer Kanalstruktur ist, ausgeführt. Insbesondere wird Wasser durch den Kapillareffekt der Hohlraumstruktur aus dem Wasserreservoir in die Kanalstruktur geführt, in der das Wasser dann weiter in der Membran verteilt wird. Unter "pumpenfrei aus einem Wasserreservoir in die Membran eingeführt" soll insbesondere verstanden werden, dass eine Aufnahme von Wasser in die Membran aus dem Wasserreservoir frei von einer Unterstützung durch einen von einer Pumpe erzeugten Druck und/oder Sog durch den Kapillareffekt der zumindest einen Hohlraumstruktur erreicht wird. Unter einem "Wasserreservoir" soll insbesondere ein mit flüssigem Wasser gefüllter Raum und/oder eine mit Wasser gefüllte Leitung verstanden werden, die einen Wasservorrat zu einer Aufnahme durch die Membran zur Verfügung stellt, wobei der mit Wasser gefüllter Raum und/oder die mit Wasser gefüllte Leitung mit einer Vorrichtung zur Nachlieferung von Wasser verbunden sein können. Es kann insbesondere konstruktiv einfach eine passive Aufnahme von Wasser durch die Membran erreicht werden und ein apparativer Aufwand und Energieaufwand zur Wasserversorgung der Membran verringert werden.

Des Weiteren wird vorgeschlagen, dass in dem zumindest einen Verfahrensschritt Wasser mit einem Kapillardruck von zumindest 25 mbar, vorteilhaft von zumindest 50 mbar, bevorzugt von zumindest 100 mbar und besonders bevorzugt von zumindest 200 mbar, in die Membran eingeführt wird. Insbesondere beträgt eine durch den Kapillardruck erreichte Steighöhe in der Membran zumindest 0,25 Meter, vorteilhaft zumindest 0,5 Meter, bevorzugt 1 Meter und besonders bevorzugt zumindest 2 Meter. Es kann insbesondere eine hohe Aufnahmeleistung der Membran erreicht werden.

Ferner wird ein Elektrolysesystem mit zumindest einer Elektrolysezelle zur elektrolytischen Spaltung von Wasser, die zumindest eine Membran aufweist, und mit einer Wasserzuführungseinheit zu einer Wasserversorgung der Elektrolysezelle, wobei die zumindest eine Membran als passive Wasserversorgungseinheit ausgebildet ist, vorgeschlagen. Unter einer "Wasserzuführungseinheit" soll insbesondere eine Einheit mit zumindest einem Wasservorratsraum, insbesondere einem Wassertank, in dem flüssiges Wasser gelagert ist, und zumindest einer Wasserleitung, die vorzugsweise als ein Wasserkanal ausgebildet ist und den Wassertank mit der zumindest einen Membran verbindet, verstanden werden. Die Wasserleitung ist zu einer Heranführung von flüssigem Wasser an die Membran vorgesehen. Insbesondere ist ein Wasserreservoir zur Versorgung der zumindest einen Membran mit Wasser in der Wasserzuführungseinheit angeordnet und dort gelagert. Unter einer "Wasserversorgungseinheit" soll insbesondere eine Einheit verstanden werden, die dazu vorgesehen ist, Wasser aus der Wasserzuführungseinheit in die Membran einzubringen und in der Membran zu verteilen. Insbesondere umfasst die Wasserversorgungseinheit zumindest eine Hohlraumstruktur der Membran, in der das Wasser geführt wird. Wasserversorgungseinheiten nach dem Stand der Technik umfassen zumindest eine Pumpe, um Wasser in die Membran einzubringen. Unter einer "passiven Wasserversorgungseinheit" soll insbesondere eine Wasserversorgungseinheit verstanden werden, die frei ist von Elementen, die eine externe Energieversorgung zu einer Erreichung einer Wasserversorgung der Membran benötigen, wie beispielsweise eine Pumpe oder ein Heizelement zu einer Verdampfung von Wasser. Es kann insbesondere ein Elektrolysesystem mit einem verringerten Energiebedarf und einem verringerten apparativen Aufwand erreicht werden.

Erfindungsgemäß wird vorgeschlagen, dass die passive Wasserversorgungseinheit zumindest eine Kanalstruktur zu einer großflächigen Verteilung von Wasser innerhalb der zumindest
einen Membran umfasst. Es kann insbesondere eine hohe Verteilungsleistung von Wasser innerhalb der Membran erreicht werden.

Erfindungsgemäß wird vorgeschlagen, dass die passive Wasserversorgungseinheit zumindest einen Membranaußenbereich, der eine gegenüber einem Membraninnenbereich feinporige Struktur bildet, mit einer Hohlraumstruktur zur Aufnahme von Wasser mittels Kapillareffekt aufweist. Es kann insbesondere eine Membran erreicht werden, die eine hohe Förderleistung von Flüssigkeiten aus einem an die Hohlraumstruktur angrenzenden Flüssigkeitsreservoir aufweist.

Ferner wird vorgeschlagen, dass die zumindest eine Hohlraumstruktur eine Porengröße von maximal 10 Mikrometern, vorteilhaft von maximal 5 Mikrometern und bevorzugt von maximal 2 Mikrometern aufweist. Unter einer "Porengröße der Hohlraumstruktur" soll insbesondere eine mittlere Größe von Poren der Hohlraumstruktur verstanden werden, wobei insbesondere eine Abweichung einer Größe einer Pore der Hohlraumstruktur maximal zwanzig Prozent, vorteilhaft maximal zehn Prozent und vorzugsweise maximal fünf Prozent der mittleren Porengröße der Hohlraumstruktur beträgt. Unter einer "Größe einer Pore" soll insbesondere ein mittlerer Porendurchmesser verstanden werden. Es kann insbesondere eine Membran mit einer hohen Steighöhe eines Kapillareffekts der Hohlraumstruktur und somit mit einer hohen Förderleistung erreicht werden.

Weiterhin wird vorgeschlagen, dass die zumindest eine Membran pumpenfrei mit der Wasserzuführungseinheit verbunden ist. Unter "pumpenfrei verbunden" soll insbesondere verstanden werden, dass eine Wasserleitung und ein Wasservorratstank der Wasserzuführungseinheit frei von einer Pumpe, die Wasser in und/oder durch die Membran pumpt, sind, so dass eine Einbringung von Wasser in die Wasserzuführungseinheit frei von einer Pumpe ist, und dass eine Entnahme von Wasser aus der Wasserzuführungseinheit durch die Membran mittels einer Kraftwirkung eines von einer Pumpe verschiedenen Elements, beispielsweise eine Kraft durch einen Kapillareffekt einer Membran, erreicht wird. Es kann insbesondere ein Verzicht auf eine Pumpe, die einen zusätzlichen Energieaufwand erfordert, erreicht werden.

Des Weiteren wird vorgeschlagen, dass die zumindest eine Membran stoffschlüssig mit einem Zellrahmen verbunden ist. Unter "stoffschlüssig verbunden" soll insbesondere mittels atomarer oder molekularer Wechselwirkungen aneinander befestigt verstanden werden, beispielsweise durch Kleben, Schweißen und/oder Anspritzen. Unter einem "Zellrahmen" sollen insbesondere Zellwandungen der Elektrolysezelle verstanden werden. Insbesondere ist der Zellrahmen zumindest teilweise aus einem Kunststoff, insbesondere einem temperaturbeständigen Kunststoff, der eine Temperatur von zumindest 70 Grad Celsius, vorteilhaft zumindest 80 Grad Celsius und bevorzugt zumindest 100 Grad Celsius, aushält, hergestellt. Grundsätzlich kann der Zellrahmen auch zumindest teilweise aus einem anderen Material, beispielsweise Metall oder einem keramischen Material, hergestellt sein. Es kann insbesondere eine Dichtung der Elektrolysezelle unter Einsparung eines separaten Dichtelements erreicht werden.

Weiterhin wird eine Elektrolysezelle für ein erfindungsgemäßes Elektrolysesystem vorgeschlagen.

Ferner wird ein Verfahren zur Herstellung einer Membran einer erfindungsgemäßen Elektrolysezelle vorgeschlagen, bei dem in zumindest eine erste Membranteileinheit mechanisch eine Kanalstruktur eingefräst wird. Unter "eingefräst" soll insbesondere durch eine Fräsmaschine aus einem Material der zumindest einen Membranteileinheit hergestellt verstanden werden. Grundsätzlich kann die Kanalstruktur auch anstatt durch Fräsen durch einen anderen Prozess, beispielsweise Ätzen oder Einschneiden, hergestellt werden. Insbesondere ist die erste Membranteileinheit dazu vorgesehen, als Membraninnenbereich verwendet zu werden. Grundsätzlich kann die Kanalstruktur auch alternativ durch Verwendung einer Hohlfaser oder von Röhrchen als erste Membranteileinheit hergestellt werden. Es kann insbesondere eine einfache und leicht automatisierbare Herstellung der Kanalstruktur erreicht werden.

Des Weiteren wird vorgeschlagen, dass die zumindest eine erste Membranteileinheit mit zumindest einer zweiten Membranteileinheit verbunden wird, die die zumindest eine erste Membranteileinheit zumindest teilweise umhüllt. Unter "zumindest teilweise umhüllen" soll insbesondere verstanden werden, dass die zumindest eine zweite Membranteileinheit die zumindest eine erste Membranteileinheit nach einer Verbindung auf zumindest einer Seite, vorteilhaft auf zumindest zwei Seiten umschließt. Insbesondere weist die erste Membranteileinheit eine gegenüber der zweiten Membranteileinheit grobporige Struktur auf. Insbesondere weist die zumindest eine zweite Membranteileinheit eine Hohlraumstruktur zur Erzeugung eines Kapillareffekts für eine Aufnahme von Wasser aus einem Wasserreservoir auf. Insbesondere bevorzugt weist die zumindest eine zweite Membranteileinheit eine Hohlraumstruktur mit einer Porengröße von maximal 10 Mikrometern, vorteilhaft von maximal 5 Mikrometern und bevorzugt von maximal 2 Mikrometern auf, die bevorzugt einen Kapillareffekt mit einem Kapillardruck von zumindest 40 mbar, vorteilhaft von zumindest 50 mbar, bevorzugt von zumindest 100 mbar und besonders bevorzugt von zumindest 200 mbar erzeugt. Insbesondere ist die zumindest eine zweite Membranteileinheit frei von einer Kanalstruktur. Es kann insbesondere eine konstruktiv einfache Herstellung der Membran erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Elektrolysesystem mit einer Elektrolysezelle zur elektrolytischen Spaltung von Wasser, die mit dem erfindungsgemäßen Verfahren betrieben wird, und
- Fig. 2: eine Detailansicht einer Membran eines erfindungsgemäßen Elektrolysesystems.

### Beschreibung der Ausführungsbeispiele

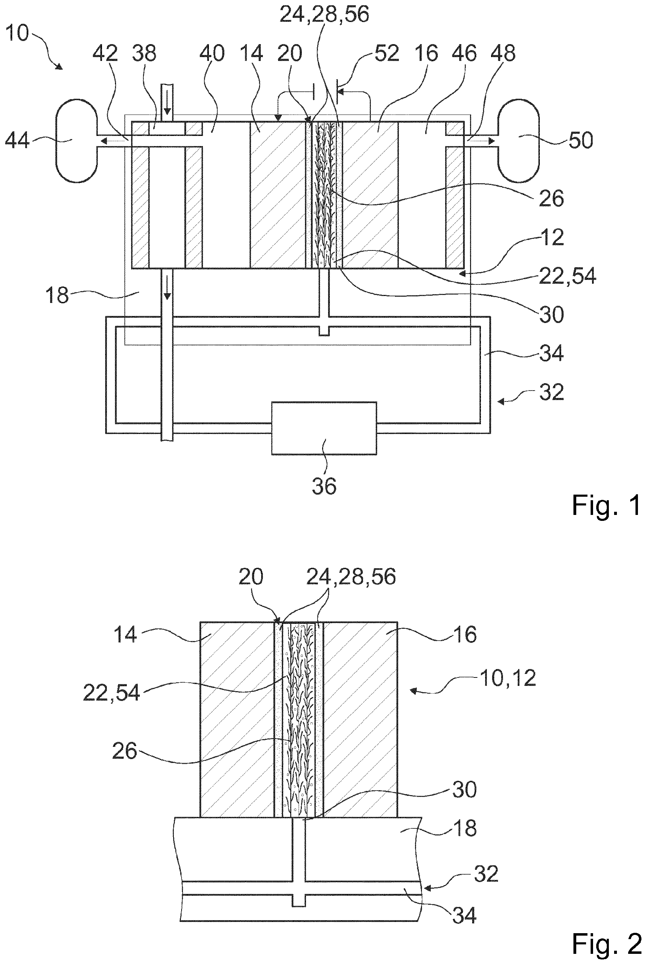

Fig. 1 zeigt ein Elektrolysesystem 10 mit einer Elektrolysezelle 12 zur elektrolytischen Spaltung von Wasser, die eine Membran 20 aufweist, und mit einer Wasserzuführungseinheit 32 für eine Zuführung von Wasser zu der Elektrolysezelle 12. Die Elektrolysezelle 12 ist für eine Ausführung des erfindungsgemäßen Verfahrens zum Betrieb einer Elektrolysezelle 12 zur elektrolytischen Spaltung von Wasser mit zumindest einer Membran 20, bei dem die Membran 20 passiv mit Wasser versorgt wird, ausgebildet. Die Elektrolysezelle 12 ist als eine alkalische Elektrolysezelle 12 ausgebildet, die zwei poröse Elektroden 14, 16 aus Nickel mit katalytischen Beschichtungen, die in Reaktionszonen angeordnet sind, und die Membran 20 aufweist. Die Reaktionszonen sind von einer Kontaktzone jeweils einer der Elektroden 14, 16 und der Membran 20 gebildet.

Die Membran 20 ist mit einem Elektrolyten, der von einer Lösung aus Kaliumhydroxid gebildet ist, getränkt und ist für Hydroxidionen passierbar, verhindert jedoch einen Übergang von in den Reaktionszonen erzeugten atomaren und molekularem Wasserstoff und Sauerstoff, welche in den Reaktionszonen, die von der Kontaktzone von der Membran 20 und der Elektrode 14 und der Kontaktzone von der Membran 20 und der Elektrode 16 gebildet ist, entstehen, von einer Reaktionszone zu der anderen Reaktionszone. Die Elektroden 14, 16 sind mit einer Stromquelle 52 verbunden und über den Elektrolyten in der Membran 20 mit der Stromquelle 52 in einem geschlossenen Stromkreislauf verbunden. Über den Stromkreislauf wird die Energie zur elektrolytischen Spaltung von Wasser durch die Stromquelle 52 eingebracht. Wasserstoff in molekularer Form wird auf einer in der Zeichnung links dargestellten Seite der Elektrolysezelle 12 in der Kontaktzone der Membran 20 und der Elektrode 14 erzeugt, indem Wasser in einer Redoxreaktion an der Elektrode 14 reduziert wird, wobei durch Zuführung von Elektronen durch die Elektrode 14 Wassermoleküle zu Hydroxidionen und molekularem Wasserstoff umgesetzt werden, und diffundiert durch die Elektrode 14 in einen Gasraum 40, aus dem es über eine Gasleitung 42 in einen Gastank 44 zur Speicherung geleitet wird. Auf einer in der Zeichnung rechts dargestellten Seite der Elektrolysezelle 12 in der Kontaktzone der Membran 20 und der Elektrode 16 wird Sauerstoff in molekularer Form durch Oxidation erzeugt, wobei Hydroxidionen unter Abgabe von Elektronen an die Elektrode 16 zu Wasser und molekularem Sauerstoff oxidiert werden, und diffundiert durch die Elektrode 16 in einen Gasraum 46, aus dem es über eine Gasleitung 48 in einen Gastank 50 geleitet wird. Die Elektrolysezelle 12 weist ferner eine Heizeinheit 38 mit einer Leitung auf, durch die erwärmtes Wasser zu einer Heizung der Elektrolysezelle 12 auf eine Betriebstemperatur von etwa 80 Grad strömt.

In dem erfindungsgemäßen Verfahren zum Betrieb einer Elektrolysezelle 12 zur elektrolytischen Spaltung von Wasser mit einer Membran 20 wird die Membran 20 passiv mit flüssigem Wasser versorgt. Hierbei wird in einem Verfahrensschritt mittels einer in der Membran 20 ausgeführten Kanalstruktur 26 Wasser innerhalb der Membran 20 verteilt und in einem gleichzeitig stattfindenden Verfahrensschritt Wasser mittels eines Kapillareffekts einer Hohlraumstruktur 28 der zumindest einen Membran 20 pumpenfrei aus einem Wasserreservoir mit einem Kapillardruck von 50 mbar in die Membran 20 eingeführt. Auch eine Einführung von flüssigem Wasser mit einem höheren Kapillardruck, beispielsweise von 100 mbar oder 200 mbar, oder mit einem niedrigeren Kapillardruck, beispielweise von 40 mbar, ist durch eine geeignete Ausführung der Hohlraumstruktur 28, insbesondere durch eine geänderte Porengröße, vorstellbar. Die Membran 20 ist somit als passive Wasserversorgungseinheit 30 ausgebildet, die Wasser aus einer Wasserzuführungseinheit 32 des Elektrolysesystems 10 in die Membran 20 einbringt und in der Membran 20 verteilt. Das Wasserreservoir ist von flüssigem, in der Wasserzuführungseinheit 32 aufgenommenem Wasser gebildet. Die passive Wasserversorgungseinheit 30 umfasst eine Kanalstruktur 26 der Membran 20 zu einer großflächigen Verteilung von Wasser innerhalb der Membran 20 und weist eine Hohlraumstruktur 28 zur Aufnahme von Wasser mittels Kapillareffekt mit einer Porengröße von 2 Mikrometern auf. Die Hohlraumstruktur 28 ist als eine feinporige Porenstruktur ausgebildet. Grundsätzlich kann die Hohlraumstruktur 28 auch eine abweichende Porengröße, beispielsweise im Bereich 0,2 Mikrometer bis 10 Mikrometern, aufweisen. Die genannten Werte der Porengröße sind als mittlere Größe von Poren der Hohlraumstruktur 28 zu verstehen. Ein Durchmesser von Kanälen der Kanalstruktur 26 der Membran 20 beträgt ein Zehntel eines Millimeters, wobei grundsätzlich auch abweichende Durchmesser, beispielsweise in einem Bereich zwischen 10 Mikrometern und einem Millimeter, möglich sind.

Die Membran 20 weist einen grobporigen Membraninnenbereich 22 mit einer Porengröße von 10 Mikrometern auf, in dem die Kanalstruktur 26 eingebracht ist (Fig. 2). Die Kanäle der Kanalstruktur 26 erstrecken sich über eine gesamte Längserstreckung des Membraninnenbereichs 22 und weisen ferner sich verästelnde Seitenkanäle auf, die eine Querverteilung des aufgenommenen Wassers übernehmen. Grundsätzlich können die Kanäle der Kanalstruktur 26 auch gerade den Membraninnenbereich 22 durchziehend und frei von Seitenkanälen ausgebildet sein. Eine Liniendichte von Kanälen der Kanalstruktur 26 beträgt vorzugsweise etwa 2/mm, zumindest 0,5/mm und maximal 5/mm. Die Hohlraumstruktur 28 ist in einem Membranaußenbereich 24 eingebracht, der eine gegenüber dem Membraninnenbereich 22 feinporige Struktur bildet. Der Membraninnenbereich 22 und der Membranaußenbereich 24 sind aus demselben Material, das von einem Polysulfon gebildet ist, hergestellt und unterscheiden sich lediglich in einer Porengröße. Die Membran 20 mit dem Membraninnenbereich 22 und dem Membranaußenbereich 24 ist als Flachmembran ausgebildet, wobei der Membranaußenbereich 24 den Membraninnenbereich 22 auf zwei Seiten umschließt und der Membranaußenbereich 24 einen Kontakt zu den Elektroden 14, 16 aufweist, während der Membraninnenbereich 22 frei von einem Kontakt zu den Elektroden 14, 16 ist.

Die Wasserzuführungseinheit 32 umfasst einen Wassertank 36 und eine Wasserleitung 34, die flüssiges Wasser zu der Membran 20 führt. Der Wassertank 36 und die Wasserleitung 34 sind frei von einer Pumpe. Die Membran 20 ist somit pumpenfrei mit der Wasserzuführungseinheit 32 verbunden. Das flüssige Wasser in der Wasserzuführungseinheit 32 fließt in den grobporigen Membraninnenbereich 22 und in die Kanäle der Kanalstruktur 26 in dem Membraninnenbereich 22 und wird durch einen Kapillareffekt der Hohlraumstruktur 28 des Membranaußenbereichs 24 aus der Kanalstruktur 26 und der Wasserzuführungseinheit 32 aufgenommen und in den Membranaußenbereich 24 und die Reaktionszone zur Spaltung geführt. Die Kanalstruktur 26 des Membraninnenbereichs 22 verteilt das Wasser in der Membran 20. Die Hohlraumstruktur 28 und die Kanalstruktur 26 sind aufeinander abgestimmt, so dass eine ausreichende Wasserversorgung der Membran 20 auch bei einer maximalen Betriebsleistung der Elektrolysezelle 12 mit einem maximalen Wasserverbrauch erreicht wird. Bei einem Fehlen der Kanalstruktur 26 könnte die Membran 20 nicht ausreichend mit Wasser versorgt werden, da der Kapillareffekt Wasser mit einer durch die Porengröße und ein Material der Membran 20 vorgegebenen Steighöhe in die Membran 20 einbringt und eine anschließende Weiterverteilung des Wassers innerhalb der Membran 20 durch Diffusion erfolgt. Eine Diffusion durch feine Poren der Hohlraumstruktur 28 weist eine geringe Förderleistung auf, so dass eine Membran 20, die lediglich aus dem Membranaußenbereich 24 besteht, keine ausreichende Wasserförderleistung aufweist, um eine passive Wasserversorgungseinheit 30 zu bilden. Die Weiterverteilung des Wassers durch die Kanäle der Kanalstruktur 26 des Membraninnenbereichs 22 in Kombination mit der Förderleistung, die durch die Hohlraumstruktur 28 des Membranaußenbereichs 24 erreicht wird, bewirkt somit, dass die Membran 20 als passive Wasserversorgungseinheit 30 ausgebildet ist. Bei einem Fehlen der Hohlraumstruktur 28 des feinporigen Membranaußenbereichs 24 würde eine Membran 20 nur eine geringe Aufnahme von Wasser aus dem Wasserreservoir in der Wasserzuführungseinheit 32, aufgrund des geringen Kapillareffekts, aufweisen und die Membran 20 würde somit keine ausreichende Wasserförderleistung aufweisen, um eine passive Wasserversorgungseinheit 30 zu bilden.

Die Membran 20 ist stoffschlüssig mit einem Zellrahmen 18 verbunden, der eine Zellwand der Elektrolysezelle 12 bildet. Der Zellrahmen 18 ist aus temperaturbeständigem Kunststoff gebildet, der bei der Betriebstemperatur formstabil ist. Eine stoffschlüssige Verbindung der Membran 20 mit dem Zellrahmen 18 wird in einem Verfahrensschritt eines Verfahren zur Herstellung einer erfindungsgemäßen Elektrolysezelle 12 durch Kleben erreicht, wobei grundsätzlich auch andere Verbindungsverfahren wie Heißpressen eingesetzt werden können. Durch die stoffschlüssige Verbindung wird eine Dichtung der Elektrolysezelle 12 unter Einsparung eines zusätzlichen Dichtelements erreicht.

Wie ein Fachmann ohne weiteres erkennt, ist ein erfindungsgemäßes Elektrolysesystem 10 nicht auf eine einzelne Elektrolysezelle 12 beschränkt, sondern kann eine Vielzahl von Elektrolysezellen 12 umfassen, die mit separaten oder gemeinsamen Wasserzuführungseinheiten 32 pumpenfrei verbunden sind.

In einem vorgeschlagenen Verfahren zur Herstellung einer Membran 20 einer erfindungsgemäßen Elektrolysezelle 12 wird in eine erste Membranteileinheit 54, die nach Herstellung den grobporigen Membraninnenbereich 22 bildet, mechanisch eine Kanalstruktur 26 eingefräst. In einem weiteren Verfahrensschritt wird die erste Membranteileinheit 54 mit einer zweiten Membranteileinheit 56 verbunden, die die erste Membranteileinheit 54 vollständig umhüllt und nach Herstellung den Membranaußenbereich 24 mit der Hohlraumstruktur 28 bildet.

In Fig. 2 ist ein Ausschnitt der Elektrolysezelle 12 des erfindungsgemäßen Elektrolysesystems 10 mit der Membran 20 und ein Ausschnitt der Wasserzuführungseinheit 32 in einer vergrößerten Darstellung gezeigt.

### Bezugszeichen

- 10: Elektrolysesystem
- 12: Elektrolysezelle
- 14: Elektrode
- 16: Elektrode
- 18: Zellrahmen
- 20: Membran
- 22: Membraninnenbereich
- 24: Membranaußenbereich
- 26: Kanalstruktur
- 28: Hohlraumstruktur
- 30: Wasserversorgungseinheit
- 32: Wasserzuführungseinheit
- 34: Wasserleitung
- 36: Wassertank
- 38: Heizeinheit
- 40: Gasraum
- 42: Gasleitung
- 44: Gastank
- 46: Gasraum
- 48: Gasleitung
- 50: Gastank
- 52: Stromquelle
- 54: Membranteileinheit
- 56: Membranteileinheit

## Patentansprüche

1. Verfahren zum Betrieb einer Elektrolysezelle (12) zur elektrolytischen Spaltung von Wasser mit zumindest einer Membran (20), **dadurch gekennzeichnet, dass** die zumindest eine Membran (20) passiv mit flüssigem Wasser versorgt wird, wobei in zumindest einem Verfahrensschritt Wasser mittels eines Kapillareffekts zumindest einer Hohlraumstruktur (28) eines Membranaußenbereichs (24) der zumindest einen Membran (20), der eine gegenüber einem Membraninnenbereich (22) feinporige Struktur bildet, pumpenfrei aus einem Wasserreservoir in die Membran (20) eingeführt wird und in zumindest einem Verfahrensschritt mittels zumindest einer in der zumindest einen Membran (20) ausgeführten Kanalstruktur (26) Wasser innerhalb der Membran (20) verteilt wird.

2. Verfahren nach Anspruch 1, **dadurch gekennzeichnet, dass** in dem zumindest einen Verfahrensschritt Wasser mit einem Kapillardruck von zumindest 25 mbar in die Membran (20) eingeführt wird.

3. Elektrolysesystem mit zumindest einer Elektrolysezelle (12) zur elektrolytischen Spaltung von Wasser, die zumindest eine Membran (20) aufweist, und mit einer Wasserzuführungseinheit (32) zu einer Wasserversorgung der Elektrolysezelle, **dadurch gekennzeichnet, dass** die zumindest eine Membran (20) als passive Wasserversorgungseinheit (30) ausgebildet ist, wobei die passive Wasserzuführungseinheit (32) zumindest einen Membranaußenbereich (24), der eine gegenüber einem Membraninnenbereich (22) feinporige Struktur bildet, mit einer Hohlraumstruktur (28) zur Aufnahme von Wasser mittels eines Kapillareffekts und zumindest eine Kanalstruktur (26) zu einer großflächigen Verteilung von Wasser innerhalb der zumindest einen Membran (20) umfasst.

4. Elektrolysesystem nach Anspruch 3, **dadurch gekennzeichnet, dass** die zumindest eine Hohlraumstruktur (28) eine Porengröße von maximal 10 Mikrometern aufweist.

5. Elektrolysesystem nach Anspruch 3 oder 4, **dadurch gekennzeichnet, dass** die zumindest eine Membran (20) pumpenfrei mit der Wasserzuführungseinheit (32) verbunden ist.

6. Elektrolysesystem zumindest nach Anspruch 3, **dadurch gekennzeichnet, dass** die zumindest eine Membran (20) stoffschlüssig mit einem Zellrahmen (18) verbunden ist.

## Claims

1. Method for operating an electrolysis cell (12) for an electrolytic water splitting, with at least one membrane (20), **characterised in that** the at least one membrane (20) is supplied with liquid water in a passive manner, wherein in at least one method step water is introduced into the membrane (20), without a pump, from a water reservoir via a capillary effect of at least one cavity structure (28) of an exterior membrane zone (24) of the at least one membrane (20), the exterior membrane zone (24) realising a structure that is fine-pored with respect to an interior membrane zone (22), and wherein in at least one method step water is distributed within the membrane (20) via at least one channel structure (26) implemented in the at least one membrane (20).

2. Method according to claim 1, **characterised in that** in the at least one method step water is introduced into the membrane (20) with a capillary pressure of at least 25 mbar.

3. Electrolysis system with at least one electrolysis cell (12) for electrolytic water splitting, the electrolytic cell (12) comprising at least one membrane (20), and with a water feed unit (32) for supplying water to the electrolysis cell, **characterised in that** the at least one membrane (20) is implemented as a passive water supply unit (30), the passive water feed unit (32) comprising at least one exterior membrane zone (24) realising a structure that is fine-pored with respect to an interior membrane zone (22), with a cavity structure (28) for an uptake of water via a capillary effect, and comprising at least one channel structure (26) for large-area distribution of water within the at least one membrane (20).

4. Electrolysis system according to claim 3, **characterised in that** the at least one cavity structure (28) features a pore size of maximally 10 µ.

5. Electrolysis system according to claim 3 or 4, **characterised in that** the at least one membrane (20) is connected, without a pump, to the water feed unit (32).

6. Electrolysis system at least according to claim 3, **characterised in that** the at least one membrane (20) is connected to a cell frame (18) via substance-to-substance bond.

## Revendications

1. Procédé de fonctionnement d'une cellule d'électrolyse (12) pour la séparation électrolytique de l'eau, avec au moins un diaphragme (20), **caractérisé en ce que** l'au moins un diaphragme (20) est passivement fourni de l'eau liquide, l'eau étant introduite dans le diaphragme (20) d'un réservoir d'eau, sans pompe, dans au moins une étape de procédé, par le biais d'un effet capillaire d'au moins une structure d'espaces creux (28) d'une zone de diaphragme extérieure (24) de l'au moins un diaphragme (20), laquelle forme une structure à pores fins par rapport à une zone de diaphragme intérieure (22), et l'eau étant distribuée dans le diaphragme (20), dans au moins une étape de procédé, par le biais d'une structure de canal (26) implémentée dans l'au moins un diaphragme.

2. Procédé selon la revendication 1, **caractérisé en ce que** l'eau est introduite dans le diaphragme (20), dans l'au moins une étape de procédé, avec une pression capillaire d'au moins 25 mbar.

3. Système d'électrolyse avec au moins une cellule d'électrolyse (12) pour la séparation électrolytique de l'eau, la cellule d'électrolyse (12) comprenant au moins un diaphragme (20), et avec une unité à l'alimentation de l'eau (32) pour fournir de l'eau à la cellule d'électrolyse, **caractérisé en ce que** l'au moins un diaphragme (20) est réalisé comme unité passive d'approvisionnement en eau (30), l'unité passive à l'alimentation de l'eau (32) comprenant au moins une zone de diaphragme extérieure (24) formant une structure à pores fins par rapport à une zone de diaphragme intérieure (22), avec une structure d'espaces creux (28) pour recevoir de l'eau par un effet capillaire, et comprenant au moins une structure de canal (26) pour une distribution par grandes surfaces de l'eau dans l'au moins un diaphragme (20).

4. Système d'électrolyse selon la revendication 3, **caractérisé en ce que** l'au moins une structure d'espaces creux (28) aie une taille de pores de maximalement 10 µ.

5. Système d'électrolyse selon la revendication 3 ou 4, **caractérisé en ce que** l'au moins un diaphragme (20) est raccordé à l'unité à l'alimentation de l'eau (32) sans pompe.

6. Système d'électrolyse au moins selon la revendication 3, **caractérisé en ce que** l'au moins un diaphragme (20) est raccordé à un cadre de cellule (18) par liaison en matière.
